# EUROPÄISCHE PATENTANMELDUNG

(11) **EP 0 991 248 A2**
(43) Veröffentlichungstag der Anmeldung: **05.04.2000**
(21) Anmeldenummer: 99114723.2
(22) Anmeldetag: 28.07.1999
(51) Int. Cl.: H04M 1/57

(54) **Einrichtung zur entfernten Anzeige eingetroffener Anrufe**

(30) Priorität: 29.09.1998 DE 19844600
(71) Anmelder: ROBERT BOSCH GMBH, 70442 Stuttgart (DE)
(72) Erfinder: Wagner, Joachim, 35625 Huettenberg (DE)

(57) **Zusammenfassung**

Bei einer Einrichtung zur entfernten Anzeige von bei einem Endgerät eines Telekommunikationsnetzes eingetroffenen Anrufen, wobei das Endgerät einen Speicher für eine Anrufliste umfaßt, in welcher die Rufnummern eingetroffener erfolgloser Anrufe abgelegt werden, ist die Anrufliste über das Telekommunikationsnetz an einen Datenserver und von dort an ein Datenendgerät als elektronische Post übertragbar.

## Beschreibung

Die Erfindung betrifft eine Einrichtung zur entfernten Anzeige von bei einem Endgerät eines Telekommunikationsnetzes eingetroffenen Anrufen, wobei das Endgerät einen Speicher für eine Anrufliste umfaßt, in welcher die Rufnummern eingetroffener erfolgloser Anrufe abgelegt werden.

In digitalen Telekommunikationsnetzen, aber auch in entsprechend ausgelegten analogen Telekommunikationsnetzen ist die Übertragung der Rufnummer des Anrufers vorgesehen. Dies ermöglicht bei dem Datenendgerät des Angerufenen für den Fall eines erfolglosen Anrufes eine Eintragung der Rufnummer des Anrufers in eine Anrufliste, häufig auch Anruferliste genannt. Nach Rückkehr kann der angerufene Teilnehmer dann auf einer Anzeigeeinrichtung (Display) ablesen, wer ihn während der Abwesenheit anrufen wollte, und kann gegebenenfalls Rückrufe einleiten.

Dieser Dienst ist bei den bekannten Telekommunikationsnetzen und Endgeräten als lokales Merkmal des Endgerätes realisiert, das heißt, die Liste wird nicht zusätzlich im Netz gespeichert. Häufig ist jedoch ein abwesender Teilnehmer daran interessiert, bereits vor seiner Rückkehr zu erfahren, wer ihn anrufen wollte. Die Aufgabe der Erfindung ist daher, eine entfernte Anzeige einer Anrufliste zu ermöglichen.

Diese Aufgabe wird bei der erfindungsgemäßen Einrichtung dadurch gelöst, daß die Anrufliste über das Telekommunikationsnetz an einen Datenserver und von dort an ein Datenendgerät als elektronische Post übertragbar ist. Dabei ist gemäß einer vorteilhaften Ausgestaltung der Erfindung vorgesehen, daß die Übertragung der Anrufliste an den Datenserver im ISDN im D-Kanal mit dem Generic-Functional(GF)-Protokoll erfolgt, das in der Norm ISO/IEC11582;1995(E) beschrieben ist.

Eine vorteilhafte Weiterbildung der erfindungsgemäßen Einrichtung besteht darin, daß im Endgerät eine Einrichtung zum selbsttätigen Übertragen der Anrufliste vorgesehen ist. Dabei kann entweder die Anrufliste zeitabhängig oder filterabhängig übertragen werden. Bei dieser Weiterbildung steht die Anrufliste dem Teilnehmer an dem entfernt angeordneten Datenendgerät ohne eine weitere Abfrage zur Verfügung. Dies gilt insbesondere dann, wenn das Datenendgerät mit dem Datenserver derart, beispielsweise über ein lokales Netz, verbunden ist, daß der Datenserver eingehende elektronische Post ohne weitere Abfrage an das Datenendgerät überträgt.

Bei einer anderen Weiterbildung der erfindungsgemäßen Einrichtung ist vorgesehen, daß das Endgerät nach Erhalt eines Befehls die Anrufliste überträgt. Diese Weiterbildung ermöglicht dem Teilnehmer bzw. einem anderen von ihm beauftragten Benutzer, die Anrufliste zu jeweils gewünschten Zeitpunkten abzufragen.

Bei dieser Weiterbildung ist eine einfache Bedienung mit den bekannten Bedienoberflächen dadurch möglich, daß der Befehl vom Datenserver aus dem Inhalt einer vom Datenendgerät im Datenserver übersandten elektronischen Post gewonnen wird.

Um die elektronische Post dem richtigen Datenendgerät zuzuleiten, ist bei einer anderen vorteilhaften Ausgestaltung vorgesehen, daß mit der Übertragung der Anrufliste vom Endgerät zum Datenserver die e-mail-Adresse des Datenendgerätes übertragen wird. Alternativ kann dieser Zweck auch dadurch erreicht werden, daß eine vom Endgerät zum Datenserver übertragene e-mail-Adresse des Datenendgerätes im Datenserver gespeichert und für folgende Übertragungen der Anrufliste verwendet wird.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild einer erfindungsgemäßen Einrichtung,
- Fig. 2: ein Blockschaltbild eines an sich bekannten Endgerätes zur weiteren Erläuterung der Erfindung,
- Fig. 3: ein Datenflußdiagramm zur Erläuterung eines ersten Ausführungsbeispiels und
- Fig. 4: ein Datenflußdiagramm zur Erläuterung eines weiteren Ausführungsbeispiels.

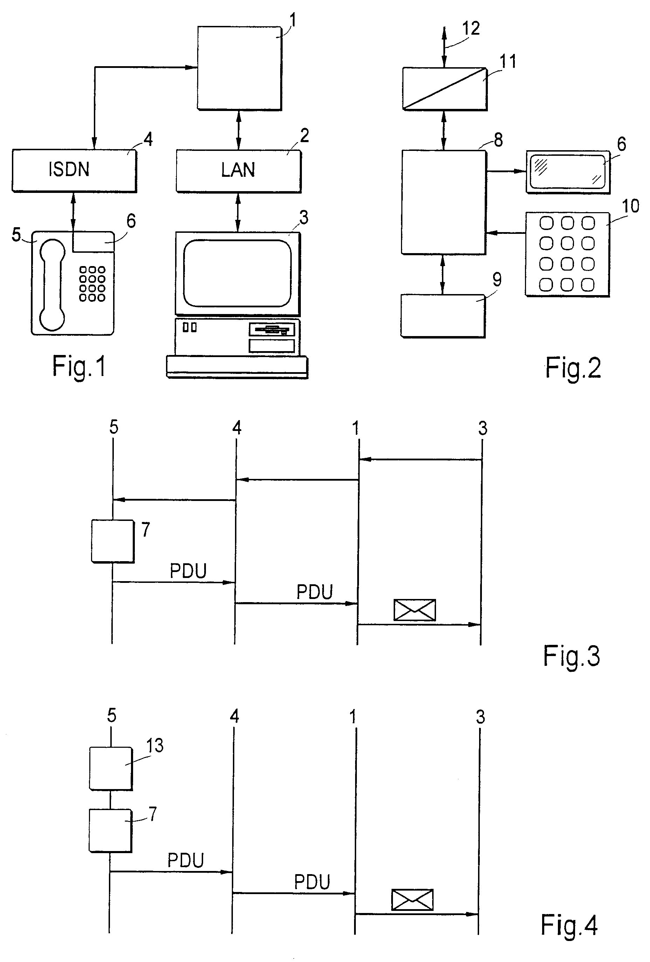

Bei der Einrichtung nach Fig. 1 ist ein Datenserver 1 über ein lokales Netzwerk 2 mit Datenendgeräten verbunden, von denen in Fig. 1 der Übersichtlichkeit halber nur ein Datenendgerät 3 dargestellt ist. Der Datenserver 1 weist ferner eine Verbindung zu einem digitalen Telekommunikationsnetz 4 auf, an das unter vielen ein Telefon 5 mit einem Display 6 angeschlossen ist.

Der Datenserver 1 empfängt, verwaltet und sendet e-mails, beispielsweise im Zusammenhang mit dem Internet oder einem Intranet.

Das Blockschaltbild gemäß Fig. 2 enthält die zur Erläuterung der Erfindung erforderlichen Teile eines Telefons. Ein Mikroprozessor 8 ist mit dem Display 6 und einer Tastatur 10 sowie mit einem nichtflüchtigen Speicher 9 verbunden. Außerdem besteht eine Verbindung des Mikroprozessors 8 über eine Anschlußeinrichtung 11 mit einer zum Telekommunikationsnetz 4 (Fig. 1) führenden Anschlußleitung 12.

Für eingehende unbeantwortete Anrufe werden im nichtflüchtigen Speicher 9 jeweils die Rufnummer und die Uhrzeit gespeichert. Bereits bei einem eingehenden unbeantworteten Anruf erscheint auf dem Display 6 eine Meldung "Anruf(e) eingegangen". Nach Rückkehr des Teilnehmers kann dieser durch entsprechende Bedienung mit Hilfe der Tastatur 10 die Anrufliste aus dem nichtflüchtigen Speicher 9 abrufen und auf dem Display 6 sichtbarmachen.

Bei dem in Fig. 3 als Datenflußdiagramm dargestellten Ausführungsbeispiel wird die im nichtflüchtigen Speicher 9 (Fig. 2) abgelgte Liste aufgrund einer Abfrage, die vom Datenendgerät 3 über den Datenserver 1 und das ISDN 4 zum Endgerät 5 gelangt, bei 7 im Mikrocomputer 8 (Fig. 2) aufbereitet und dort mit entsprechender Wähl- und Adresseninformation versehen. Über den D-Kanal des ISDN wird die Anrufliste dann als GF-Protokoll zum Datenserver 1 übertragen, der sie als e-mail dem Datenendgerät zur Verfügung stellt. Die Abfrage kann vom Datenserver zum Endgerät 5 ebenfalls im D-Kanal unter Verwendung des GF-Protokolls übertragen werden.

Zur Realisierung dieses Ausführungsbeispiels ist im Mikrocomputer 8 (Fig. 2) neben den üblichen Programmen zur Verwaltung und Darstellung der Anrufliste ein Programm zur Erkennung und Authentifizierung der Abfrage, zur Aufbereitung der Anrufliste und zum Absenden der Anrufliste unter Verwendung der Wähl- bzw. Adresseninformation eingerichtet.

Bei dem in Fig. 4 schematisch dargestellten Ausführungsbeispiel befindet sich im Endgerät 5 bzw. im Mikroprozessor 8 (Fig. 2) in Form eines Programmteils 13 eine Einrichtung zur Steuerung des Absendens der Anrufliste. Diese kann beispielsweise zeit- oder filterabhängig ausgebildet sein, wobei zur Filterung wiederum verschiedene Kriterien dienen, beispielsweise zuvor eingegebene ausgewählte Rufnummern. Wird beispielsweise bei 13 festgestellt, daß eine vorgegebene Zeit abgelaufen ist, so wird bei 7 die Anrufliste aufbereitet und anschließend die Daten wie bei dem Ausführungsbeispiel nach Fig. 3 versendet.

## Patentansprüche

1. Einrichtung zur entfernten Anzeige von bei einem Endgerät (5) eines Telekommunikationsnetzes (4) eingetroffenen Anrufen, wobei das Endgerät 5) einen Speicher (9) für eine Anrufliste umfaßt, in welcher die Rufnummern eingetroffener erfolgloser Anrufe abgelegt werden, dadurch gekennzeichnet, daß die Anrufliste über das Telekommunikationsnetz (4) an einen Datenserver (1) und von dort an ein Datenendgerät (3) als elektronische Post übertragbar ist.

2. Einrichtung nach Anspruch 1, dadurch gekennzeichnet, daß die Übertragung der Anrufliste an den Datenserver (1) im ISDN (4) im D-Kanal mit dem Generic-Functional(GF)-Protokoll erfolgt.

3. Einrichtung nach einem der Ansprüche 1 oder 2, dadurch gekennzeichnet, daß im Endgerät (5) eine Einrichtung zum selbsttätigen Übertragen der Anrufliste vorgesehen ist.

4. Einrichtung nach Anspruch 3, dadurch gekennzeichnet, daß die Anrufliste zeitabhängig übertragen wird.

5. Einrichtung nach Anspruch 3, dadurch gekennzeichnet, daß die Anrufliste filterabhängig übertragen wird.

6. Einrichtung nach einem der Ansprüche 1 und 2, dadurch gekennzeichnet, daß das Endgerät (5) nach Erhalt eines Befehls die Anrufliste überträgt.

7. Einrichtung nach Anspruch 6, dadurch gekennzeichnet, daß der Befehl vom Datenserver (1) aus dem Inhalt einer vom Datenendgerät (3) im Datenserver (1) übersandten elektronischen Post gewonnen wird.

8. Einrichtung nach einem der vorhergehenden Ansprüche, dadurch gekennzeichnet, daß mit der Übertragung der Anrufliste vom Endgerät (5) zum Datenserver (1) die e-mail-Adresse des Datenendgerätes (3) übertragen wird.

9. Einrichtung nach Anspruch 7, dadurch gekennzeichnet, daß eine vom Endgerät (5) zum Datenserver (1) übertragene e-mail-Adresse des Datenendgerätes (3) im Datenserver (1) gespeichert und für folgende Übertragungen der Anrufliste verwendet wird.
